## Europäisches Patentamt
## European Patent Office
## Office européen des brevets

(11) Veröffentlichungsnummer: **0 315 575**
**A1**

# EUROPÄISCHE PATENTANMELDUNG

(21) Anmeldenummer: 88730214.9

(22) Anmeldetag: 15.09.88

(51) Int. Cl.4: **G 01 B 21/10**
**B 23 Q 17/20**

(30) Priorität: 18.09.87 DE 3731868

(43) Veröffentlichungstag der Anmeldung:
10.05.89 Patentblatt 89/19

(84) Benannte Vertragsstaaten:
AT CH DE FR GB IT LI SE

(71) Anmelder: H. Wohlenberg KG, GmbH & Co.
Wohlenbergstrasse 6 - 8
D-3000 Hannover 1 (DE)

(72) Erfinder: Dornhöfer, Reinhard
Amselweg 9
D-3008 Garbsen 5 (DE)

Brandt, Günter
Wegsfeldhof 12
D-3000 Hannover 91 (DE)

Krentz, Andreas
Klagesgarten 1A
D-3005 Hemmimgen (DE)

(74) Vertreter: Thömen, Uwe, Dipl.-Ing.
Patentanwalt U. Thömen Zeppelinstrasse 5
D-3000 Hannover 1 (DE)

(54) Verfahren und Messvorrichtung zur Durchmesserermittlung von Walzen.

(57) Zur Ermittlung des Durchmessers einer auf einer NC-Dreh-maschine zu bearbeitenden Walze werden zu beiden Seiten der Walze schaltende Taster (22, 26) vorgesehen, die sich in einem konstanten Abstand (A) zueinander befinden, der größer als der Durchmesser (D) der Walze (10) ist. Durch gemeinsames Verfahren der schaltenden Taster wird zunächst der eine Taster und danach der andere Taster in Berührung mit der Oberfläche der Walze (10) gebracht, wodurch die Abstände ($X_V$; $X_H$) der beiden Taster von der Walze (10) bestimmt werden können, und aus diesen Abständen ($X_V$, $X_H$ und dem gemeinsamen Abstand (A) der Taster zueinander läßt sich der Durchmesser (D) ermitteln.

Fig. 1

EP 0 315 575 A1

# Beschreibung

## Verfahren und Meßvorrichtung zur Durchmesserermittlung von Walzen

Die Erfindung betrifft ein Verfahren zur Ermittlung des Durchmessers einer auf einer programmgesteuerten Drehmaschine (NC-Drehmaschine) zu bearbeitenden Walze gemäß dem Oberbegriff des Patentanspruchs 1, und außerdem befaßt sich die Erfindung mit einer Meßvorrichtung nach dem Oberbegriff des Anspruchs 3.

Mit programmgesteuerten Maschinen, wie NC-Drehmaschinen und Bearbeitungszentren, lassen sich nicht nur Werkstücke bearbeiten. Es ist auch möglich, mit diesen Maschinen Messungen durchzuführen, um unzulässige Maßabweichungen am Werkstück frühzeitig zu erken nen, und um dann geeignete Korrekturmaßnahmen einleiten zu können.

Durch den Siemens-Prospekt "SINUMERIK, SYSTEM 3, SYSTEM 8, MEßZYKLEN TEIL I", Ausgabe 2.85, ist es bekannt, zur Feststellung von Maßabweichungen am Werkstück einen wie ein Werkzeug einsetzbaren Meßfühler zu verwenden, welcher ein Signal abgibt, wenn er durch Berührung mit dem Werkstück aus seiner Ruhelage ausgelenkt wird. Ein solcher Meßfühler wird als schaltender Meßfühler oder schaltender Taster bezeichnet. Die bei jeder NC-Maschine für deren Funktionsweise benötigten Meßsysteme werden nun für das Bestimmen der Ist-Maße eines Werkstückes mit Hilfe des schaltenden Tasters herangezogen, um Maßabweichungen am Werkstück feststellen zu können.

Für die Ermittlung der Ist-Maße des Werkstücks wird der schaltende Taster über das Bearbeitungsprogramm der NC-Maschine an Stelle eines Werkzeugs verfahren, wobei die programmierte Soll-Position hinter der Meßstelle liegt. Bei Auslenkung des Tasters wird dann mit dem Wechsel des Schaltsignals, welches direkt an den Meßkreis der CNC weitergeleitet wird, der Achsantrieb unverzüglich stillgesetzt, und der noch abzufah rende Restweg wird gelöscht. Dieses Meßprinzip wird als "Fliegendes Messen" bezeichnet. Der Vorteil des fliegenden Messens besteht darin, daß sich die Zeit für einen Meßvorgang relativ kurz halten läßt. Bei der Anwendung des soweit beschriebenen und bekannten Meßverfahrens mit einem schaltenden Taster ergeben sich dann Nachteile, wenn mit einer NC-Drehmaschine lange Werkstücke zwischen Spitzen, beispielsweise lange Preßwalzen oder Kalanderwalzen, mit großer Genauigkeit bearbeitet werden sollen. Es können nämlich dadurch Fehler bei der Bearbeitung und beim Messen auftreten, daß beispielsweise die Werkstückachse von der Maschinenachse abweicht oder daß die Werkzeugführung ungenau verläuft. Derartige Abweichungen können insbesondere schon durch äußere Einflüsse wie Sonneneinstrahlung und ungünstige Luftumwälzungen zustande kommen, wenn extrem hohe Genauigkeiten gefordert sind.

Beim Meßvorgang mit Hilfe eines schaltenden Tasters ist ferner zu berücksichtigen, daß dieser auf der gleichen Führungsbahn wie das Werkzeug geführt ist. Wenn deshalb mit dem Werkzeug die Walze wegen einer asymmetrischen Einspannung zwischen den Spitzen bei spielsweise eine von der gewünschten Zylinderform abweichende Kegelform der Walze erzeugt, ist dieser Fehler mit dem auf der gleichen Führungsbahn wie das Werkzeug gefühl-ten schaltenden Taster meßtechnisch gar nicht zu erfassen.

Der Erfindung liegt die Aufgabe zugrunde, ein Verfahren anzugeben bzw. eine Meßvorrichtung zu schaffen, um ein hochgenaues Drehen von Walzen unter Ausschaltung möglicher Fehlerquellen zu gestatten, unter Einbeziehung einer sehr genauen Ermittlung des Durchmessers der Walzen.

Dieses Ziel erreicht die Erfindung bei dem im Oberbegriff des Patentanspruchs 1 angegebenen Verfahren durch die im kennzeichnenden Teil beschriebenen Verfahrensmerkmale.

Bezüglich der Meßvorrichtung wird die Aufgabe bei der im Oberbegriff des Anspruchs 3 vorausgesetzten Meßvorrichtung durch die im kennzeichnenden Teil des Anspruchs 3 angegebenen Merkmale gelöst. Bei der Erfindung sind auf beiden Seiten der Walze jeweils ein schaltender Taster vorgesehen und es kommt das Prinzip des fliegenden Messens und des hochgenauen Zweipunkt-Meßverfahrens zur Anwendung. Hervorzuheben ist, daß beide schaltenden Taster auf einem gemeinsamen Gestell in Form des Planschiebers starr und fest voneinander angeordnet sind. Der gegenseitige Abstand der schaltenden Taster, der größer als der Durchmesser der Walze gewählt wird, bleibt also konstant, und wegen der Anordnung auf einem gemeinsamen Gestell werden beide schaltende Taster stets auch gemeinsam bewegt.

Bei dem erfindungsgemäßen Verfahren befindet sich der eine Taster vor der Drehmitte der NC-Drehmaschine bzw. der Walze und der andere Taster gegenüber hinter der Drehmitte. Eine gedachte Verbindungslinie zwischen den beiden Tastern verläuft durch die Drehmitte. Wie erwähnt, ist der gleichbleibende Abstand A zwischen den beiden Tastern größer als der Durchmesser D der Walze.

Zunächst wird nun der Abstand $X_V$ des vorderen Tasters zur Oberfläche der Walze bestimmt, und im Anschluß wird der Abstand $X_H$ des hinteren Tasters zur benachbarten Walzenoberfläche ermittelt. Die Summe der beiden Abstände $X_V + X_H$ wird nun von dem festen Abstandswert A subtrahiert, so daß sich der Durchmesser $D = A - X_V - X_H$ ergibt.

Die eingangs erwähnten möglichen Fehlerquellen bei der Messung beispielsweise bei einer kegelförmig gedrehten Walze sind hier ausgeschlossen, weil auf beiden Seiten der Walze mit zwei schaltenden Tastern Meßpunkte vorhanden sind.

Bei der neuen Meßvorrichtung nach dem Anspruch 3 sind zwei in radialer Richtung im Abstand von der Oberfläche der Walze befindliche Meßköpfe, vorzugsweise schaltende Taster, vorgesehen. Der Abstand der beiden Taster voneinander ist grundsätzlich größer als der größte zu vermessende Durchmesser der Walze. Die Lage der Taster kann in Stufen an die bevorzugt bearbeiteten Durchmesserbereiche angepaßt werden, um die Anlaufzeiten zum Messen möglichst klein zu halten.

In zweckmäßiger Weise befindet sich der eine schaltende Taster vor der Drehmitte mit definierter Lage zur Revolver-Schwenkachse der Drehmaschine, und der andere Taster ist hinter der Drehmitte - also auf der anderen Seite der Walze - angeordnet und hat ebenfalls eine definierte einstellbare Lage in Bezug auf die Revolver-Schwenkachse vor der Drehmitte.

Zum Einrichten der Drehmaschine kann der Tastarm hinter der Drehmitte maschinell abgeschwenkt werden, und das Ein- und Ausschwenken ist über zwei Hilfsfunktionen aufrufbar. Für die Messung selbst wird in an sich bekannter Weise das maschineneigene Meßsystem der NC-Drehmaschine benutzt, indem die beiden auf einem gemeinsamen Gestell angeordneten Taster gemeinsam zunächst in einer ersten Richtung bewegt werden, bis der erste Taster in Berührung mit der Oberfläche der Walze kommt. Danach werden beide Taster gemeinsam in die entgegengesetzte Richtung bewegt, bis der andere Taster in Berührung mit der Oberfläche der Walze kommt. Die jeweils verfahrenen Meßwege von der Ruhestellung bis zur Berührung mit der Oberfläche der Walze stellen die weiter oben schon erwähnten Abstandswerte $X_V$ und $X_H$ dar. Vor jedem Antasten der Walze kann über einen separaten Preßluftanschluß die Meßstelle saubergeblasen werden.

Die Daten der Walze, wie Gesamtlänge, Ballenlänge, Durchmesser und Anzahl der gewünschten Meßstellen in Richtung der Längsachse der Walze können in einer Grunddatenmaske in der NC-Steuerung der NC-Drehmaschine hinterlegt werden.

Nach dem Starten des Meßprogramms läuft ein Rechnerprogramm ab, das die eingegebenen Daten in Bezug auf diese Grunddaten überprüft und ergänzt. So wird z.B. aus der Ballenlänge und der Anzahl der Meßstellen der Meßstellenabstand der einzelnen gewünschten Meßstellen errechnet und hinterlegt.

Das Meßsystem ist in die CNC-Steuerung eingebunden und kann über Unterprogramme angesprochen werden. Durch die Benutzung des maschineneigenen Meßsystems entfallen die sonst sehr aufwendigen Zusatzaufbauten und Rüstzeiten.

Der bevorzugte Anwendungsbereich der Erfindung liegt im Ausmessen von Walzen aller Art nach der Fertigbearbeitung und beim Protokollieren der Meßergebnisse. So lassen sich beispielsweise elastische Walzen für Papierkalander hochgenau vermessen und bearbeiten.

Andere zweckmäßige Ausgestaltungen und vorteilhafte Weiterbildungen der Erfindung ergeben sich aus den Unteransprüchen und der Beschreibung.

Nachfolgend wird die Erfindung zum besseren Verständnis anhand des in der Zeichnung dargestellten Ausführungsbeispiels näher erläutert. Es zeigen:

Fig. 1 eine schematische Querschnittsansicht einer NC-Drehmaschine mit einer eingespannten Walze und einer ersten Meßvorrichtung,

Fig. 2 eine schematische Querschnittsansicht gemäß Fig. 1, jedoch mit einer zweiten Ausführungsform einer Meßvorrichtung, und

Fig. 3 eine Seitenansicht einer Walze mit mehreren Meßstellen und Durchmesserwerten.

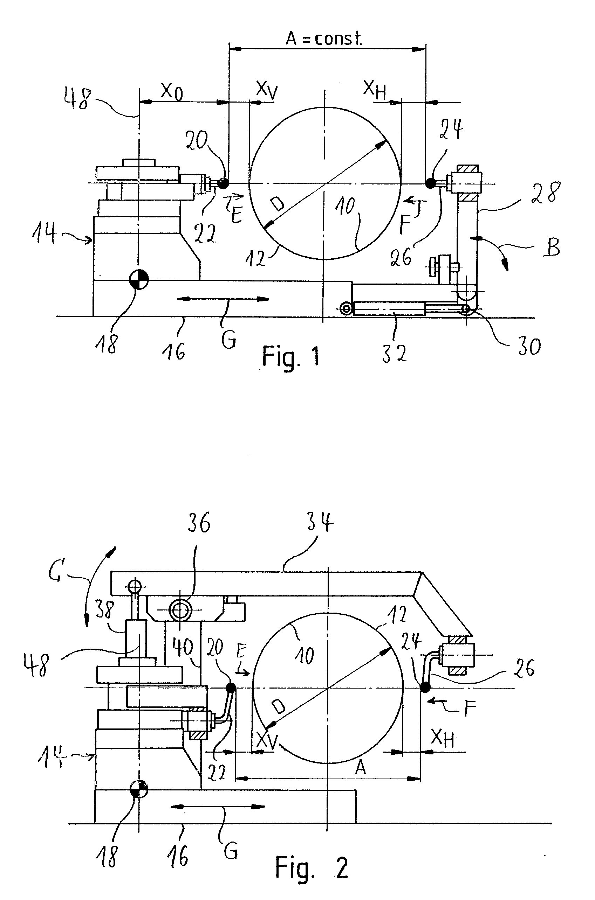

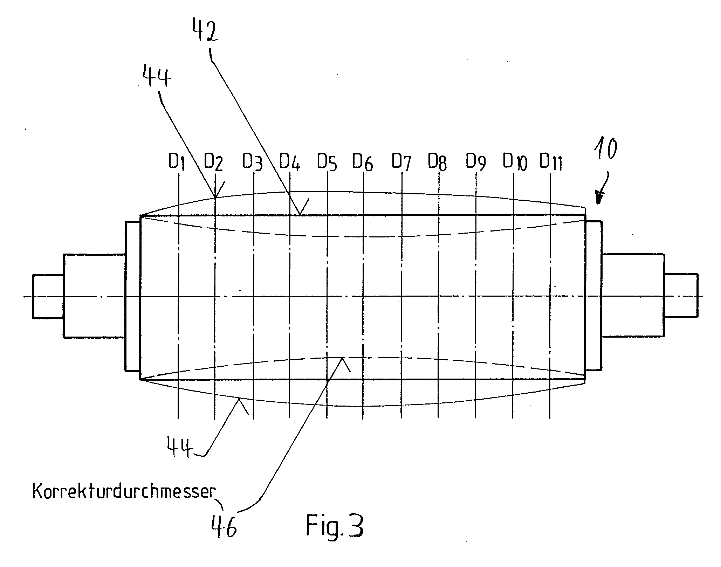

In Fig. 1 ist eine im Querschnitt dargestellte Walze 10 in eine nicht näher gezeigte NC-Drehmaschine eingespannt, die in an sich bekannter Weise mit einem Werkzeugrevolver 14 auf einem Planschieber 16 mit einem Schlittenbezugspunkt 18 versehen ist. Mit Hilfe der NC-Drehmaschine wird die auch in Fig. 3 dargestellte Walze bearbeitet, um einen Durchmesser D zu erreichen.

Für die Ermittlung des Durchmessers sind zu beiden Sei ten der Drehmitte ein vorderer und ein hinterer schaltender Taster vorgesehen, die jeweils durch Tastköpfe 20 bzw. 24 mit Taststiften 22 bzw. 26 gebildet sind.

Der vordere Tastkopf 20 und der hintere Tastkopf 24 befinden sich in einem konstanten Abstand A voneinander mit jeweils definierter einstellbarer Lage in Bezug auf die Revolver-Schwenkachse 48. Der gegenseitige Abstand A der Tastköpfe 20 und 24 ist größer als der Durchmesser D der Walze 10, so daß zwischen dem vorderen Tastkopf 20 und der benachbarten Oberfläche 12 der Walze 10 der Abstand $X_V$ und zwischen dem hinteren Tastkopf 24 und der benachbarten Oberfläche 12 der Walze 10 der Abstand $X_H$ vorhanden ist. Sowohl in Fig. 1 als auch in Fig. 2 gilt demnach die Beziehung

$$A = D + X_V + X_H$$

wobei der Abstand A ein Festwert ist, während $X_V$ und $X_H$ Meßwerte darstellen, die in der folgende noch näher beschriebenen Weise ermittelt werden, um den Durchmesser gemäß der abgewandelten Beziehung

$$D = A - X_V - X_H$$ zu bestimmen, wobei in der CNC-Steuerung der NC-Drehmaschine die Durchmesserermittlung in der Art vorgenommen wird, wie sie beim fliegenden Messen an sich bekannt ist.

Während der vordere schaltende Taster mit dem Tastkopf 20 und dem Taststift 22 am Werkzeugrevolver 14 befestigt ist, befindet sich der gegenüberliegende Tastkopf 24 mit seinem Taststift 26 am oberen Ende eines Tastarmes 28, der um einen Schwenkpunkt 30 verschwenkbar ist, wie der Doppelpfeil B andeutet. Für die Durchführung der Schwenkbewegung ist ein Zylinder 32 vorgesehen, durch welchen der Tastarm 28 in die gezeigte senkrechte Stellung oder in eine waagerechte Stellung gebracht werden kann. In dieser waagerechten Stellung ist die NC-Drehmaschine also zugänglich, beispielsweise um eine Walze einzuspannen, ohne daß der Tastarm 28 stört.

Bei der Ausführungsform gemäß Fig. 2 stehen die beiden Tastköpfe 20 und 24 über einen oberhalb der Walze 10 verlaufenden anderen Tastarm 34 in Verbindung, der mit Hilfe eines Zylinders 38 um den Schwenkpunkt 36 in Richtung des Doppelpfeiles C schwenkbar ist, wobei der Tastarm 34 von der Fig. 2 gezeigten Arbeitsstellung nach oben verschwenkt werden kann, so daß die NC-Drehmaschine dann wiederum von der einen Seite her zugänglich ist.

In beiden Ausführungsformen gemäß Fig. 1 und Fig. 2 ist wichtig, daß die Tastköpfe 20 und 24 in den gezeigten Positionen im starren Abstand zueinander angeordnet sind, wobei dieser Abstand auch während des Meßvorganges unverändert bleibt. Zu der Ausführungsform gemäß Fig. 2 ist noch anzumerken, daß der Tastarm 34 von einem Ständer 40 getragen wird, an dessen oberen Ende sich der Schwenkpunkt 36 befindet.

In Verbindung mit Fig. 3 wird nachfolgend der Meßvorgang zur Bestimmung des Durchmessers D der Walze 10 erläutert, für deren Durchmesser ein Soll-Wert 42 vorgegeben ist.

Nach der Bearbeitung der Walze 10 mittels der NC-Drehmaschine sei angenommen, daß die Walze 10 einen Durchmesserverlauf mit den Ist-Werten 44 besitzt. In der Seitenansicht gemäß Fig. 3 verläuft die Umfangslinie also leicht gewölbt. Der Durchmesser der Walze 10 wird nacheinander an elf unterschiedlichen Meßstellen durchgeführt, um Durchmesserwerte D1 bis D11 zu bestimmen.

Zunächst erfolgt nach Abschluß der Bearbeitung der Walze 10 das Einschwenken der beiden Tastköpfe 20 und 24 in die Ausgangslage gemäß Fig. 1 bzw. Fig. 2, und es wird dann mit dem Planschieber 16 die erste, dem Durchmesser D1 zugeordnete Meßposition angefahren. Wie durch den Doppelpfeil G dargestellt ist, kann der Planschieber 16 danach in waagerechter Richtung nach vorne und hinten bzw. nach links und rechts verfahren werden. Dabei bewegen sich die im konstanten Abstand A zueinander befindlichen Tastköpfe 20 und 24 gemeinsam.

Zunächst wird der vordere Tastkopf 20 im Planschieber-Eilgang an die Walze 10 in Richtung des Pfeiles E angefahren. In einem frei wählbaren Abstand des Tastkopfes 20 vor der Oberfläche 12 der Walze 10 wird die Planschieber-Vorschubgeschwindigkeit auf etwa 150 mm/min reduziert, und gleichzeitig erfolgt das Anblasen der Meßstelle.

Unmittelbar nach dem Antasten der Oberfläche 12 durch den Tastkopf 20 wird der Rücklaufbefehl erteilt und der Planschieber 16 läuft im Eilgang automatisch in die Ausgangsposition zurück. Der zurückgelegte Verfahrweg vom Startpunkt bis zum Schalten des Tasters entspricht dem Abstand $X_V$, der gemessen und intern abgelegt wird.

Im Anschluß daran erfolgt das Anfahren der Walze 10 mit dem hinteren bzw. rechten Tastkopf 26 in Richtung des Pfeiles F im Planschieber-Eilgang. Dieser Vorgang erfolgt im übrigen in der gleichen Weise, wie zuvor beschrieben. Nach der Berührung des Tastkopfes 24 mit der Oberfläche 12 der Walze 10 läuft also der Planschieber im Eilgang automatisch in die in Fig. 1 und 2 gezeigten Ausgangspositionen zurück, und auch hier wird der Abstand $X_H$ gemessen und intern abgelegt.

Die so ermittelten Meßwerte $X_V$ und $X_H$ werden danach ausgewertet, um mit Hilfe der weiter oben schon erwähnten Beziehung den Durchmesser D1 an der Meßposition 1 zu errechnen, und dieser Wert kann als Ist-Durchmesser D1 an einem Bildschirm angezeigt werden. Der gesamte Zyklus läuft in weniger als 10 sec. ab. Danach wird die gesamte Meßvorrichtung in eine zweite Meßposition verfahren, die in Fig. 3 dem Durchmesser D2 zugeordnet ist, und es erfolgt die Wiederholung der voranstehend erläuterten Vorgänge, um den Ist-Durchmesser D2 zu errechnen und anzuzeigen.

In dieser Weise können vollprogrammiert und vollautomatisch nacheinander alle vorgegebenen Meßstellen angefahren werden, um die Ist-Durchmesser D1 bis D11 als Ist-Werte zu bestimmen. Die eventuelle Meßunsicherheit hängt von der Positionsstreubreite des Planschiebers 16, von der Schaltgenauigkeit der Tastköpfe 20, 24 und von der Oberflächenbeschaffenheit der Walze 10 ab. Wie sich gezeigt hat, kann von einer Meßunsicherheit von nur etwa 10 μm ausgegangen werden, was dann auch eine sehr genaue Bearbeitung der Walze 10 erlaubt.

Die soweit beschriebenen Durchmesserbestimmungen D1 bis D11 können anschließend bei einer anderen Winkellage der Walze 10 vorgenommen werden. So lassen sich beispielsweise die in Fig. 3 zu erkennenden elf Meßpositionen bei Winkellagen von 0° und 90° durchführen. Zur Dokumentation können die jeweiligen Meßergebnisse D1 bis D11 bei unterschiedlichen Winkellagen mit einem Drucker graphisch dargestellt werden.

Bei der Erfindung wird also in der NC-Drehmaschine ein automatisches Messen mit zwei schaltenden Tastern vorgenommen, wobei einerseits die Darstellung und Protokollierung der Meßabweichungen am fertig bearbeiteten Werkstück ermöglicht wird, und andererseits auch die Möglichkeit besteht, aus den abgespeicherten und ermittelten Meßergebnissen maschinell ein Korrekturprogramm zu generieren, und so das Werkstück, also die Walze 10, mit Hilfe einer linearen Interpolation auf exakte Soll-Werte fertig zu drehen.

Die lineare Interpolation ergibt sich aus der Zeichnung gemäß Fig. 3. Zunächst werden die Ist-Durchmesserwerte D1 bis D11 so interpoliert, daß sich die Linie des Ist-Wertes 44 ergibt, die leicht nach außen gewölbt verläuft. Auf der Basis der Ist-Werte 44 wird dann ein Korrekturprogramm mit Korrekturwerten gemäß der Korrekturlinie 46 erzeugt. Nach Maßgabe dieser Korrekturlinie 46 wird also anschließend die Walze 10 neu bearbeitet, so daß sich dann im Endergebnis der gewünschte Soll-Wert 42 ergibt.

Im einzelnen kommen also folgende Verfahrensschritte zur Anwendung. Zunächst erfolgt das automatische Vermessen der Walze 10 in definierten Abständen bei unterschiedlichen Meßpositionen der zuvor ohne Korrektur gedrehten Walze 10 zur Ermittlung der Durchmesserwerte D1 bis D11. Im Anschluß daran geschieht das automatische Verarbeiten der gemessenen Durchmesserwerte bzw. Durchmesserdifferenzen mit Hilfe eines generierbaren und korrigierenden Drehprogrammes. Hierbei wird die vermessene Walze 10 in Meßabschnitte aufgeteilt und jeder Abschnitt linear interpoliert. Die zugeordneten Durchmesserabweichungen vom Soll-Wert bestimmen dabei die Größe der erforderlichen linearen Interpolation.

Bei Walzen 10 mit einer definierten Bombierung besteht übrigens gleichfalls die Möglichkeit, diese nach dem Drehvorgang in der beschriebenen Weise zu vermessen, indem für jede Meßposition der zugeordnete Soll-Durchmesser maschinell vorgegeben wird.

In vorteilhafter Weise ist bei der Erfindung auch eine direkte graphische Darstellung der Meßergebnisse möglich, wenn an die CNC-Steuerung ein üblicher Personal-Computer angeschlossen wird.

**Patentansprüche**

1. Verfahren zur Ermittlung des Durchmessers einer auf einer programmgesteuerten Drehmaschine (NC-Drehmaschine) zu bearbeitenden Walze, insbesondere um aus den gemessenen Durchmesserwerten eine korrigierende Bearbeitung der Walze zur Erzielung des gewünschten Soll-Durchmessers durchzuführen, dadurch gekennzeichnet, daß an gegenüberliegenden Seiten der Oberfläche der Walze in radialer Richtung der Abstand zwischen einem ersten Meßkopf und der benachbarten Oberfläche der Walze und der Abstand zwischen einem auf der anderen Seite der Walze befindlichen zweiten Meßkopf und der benachbarten Oberfläche der Walze ermittelt wird, und daß die Summe der beiden Abstände von dem konstanten gegenseitigen Abstand der beiden Meßköpfe zueinander subtra hiert wird.

2. Verfahren nach Anspruch 1, dadurch gekennzeichnet, daß die Abstände zwischen dem ersten Meßkopf bzw. dem zweiten Meßkopf und den jeweils benachbarten Oberflächen der Walze dadurch ermittelt werden, daß die Meßköpfe nacheinander in radialer Richtung von einer Ausgangsstellung bis zur Berührung mit der Oberfläche der Walze verfahren werden und daß die Länge des Verfahrweges gemessen wird.

3. Meßvorrichtung zur Ermittlung des Durchmessers einer auf einer programmgesteuerten Drehmaschine (NC-Drehmaschine) zu bearbeitenden Walze, insbesondere um aus den gemessenen Durchmesserwerten eine korrigierende Bearbeitung der Walze zur Erzielung des gewünschten Soll-Durchmessers durchzuführen, wobei die Vorrichtung einen in seiner Ruhestellung im Abstand von der Oberfläche der Walze befindlichen Meßkopf enthält, dessen Abstand von der Oberfläche der Walze unter Ausnutzung der Eigenschaften der NC-Drehmaschine bestimmbar ist, dadurch gekennzeichnet, daß die Meßvorrichtung zwei in radialer Richtung im Abstand ($X_V$; $X_H$) von der Oberfläche (12) der Walze (10) befindliche Meßköpfe (20, 24) aufweist, daß die Meßköpfe (20, 24) in einem gleichbleibenden wählbaren Abstand (A) voneinander angeordnet sind, und daß der gleichbleibende Abstand (A) größer als der zu messende Durchmesser (D) der Walze (10) ist.

4. Meßvorrichtung nach Anspruch 3, dadurch gekennzeichnet, daß die Meßköpfe durch schaltende Taster (20, 24) gebildet sind, die bei Auslenkung aus ihrer Ruhelage ein elektrisches Signal erzeugen.

5. Meßvorrichtung nach Anspruch 4, dadurch gekennzeichnet, daß die schaltenden Taster (20, 24) auf einem gemeinsamen Gestell angeordnet und gemeinsam in radialer Richtung verfahrbar sind.

6. Meßvorrichtung nach Anspruch 4, und/ oder 5, dadurch gekennzeichnet, daß die schaltenden Taster (20, 24) zunächst in eine erste radiale Richtung (E) verfahrbar sind, bis der erste Taster (20) in Berührung mit der Oberfläche (12) der Walze (10) gelangt, und daß die Taster (20, 24) danach in entgegengesetzter Richtung (F) verfahrbar sind, bis der zweite Taster (24) in Berührung mit der Oberfläche (12) der Walze (10) gelangt.

7. Meßvorrichtung nach einem der vorhergehenden Ansprüche 3 - 6, dadurch gekennzeichnet, daß die Meßköpfe (20, 24) in Längsrichtung der Walze (10) bewegbar sind.

8. Meßvorrichtung nach einem der vorhergehenden Ansprüche 3 - 7, dadurch gekennzeichnet, daß der eine Meßkopf (20) an dem Werkzeugrevolver (14) der NC-Drehmaschine befestigt ist, und daß der andere Meßkopf (24) an einen mit dem Werkzeugrevolver (14) verbundenen Tastarm (28, 34) angeordnet ist.

9. Meßvorrichtung nach Anspruch 8, dadurch gekennzeichnet, daß der Tastarm (28, 34) um einen Schwenkpunkt (30, 36) verschwenkbar ist.

10. Meßvorrichtung nach Anspruch 9, dadurch gekennzeichnet, daß zum Verschwenken des Tastarms (28, 34) ein hydraulischer Zylinder (32, 38) vorgesehen ist.

Fig. 1

Fig. 2

Korrekturdurchmesser

Fig. 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 88730214.9 |
| X | EP - A2 - 0 199 705 (HEID) <br> * Gesamt * <br><br> -- | 1-3 | G 01 B 21/10 <br> B 23 Q 17/20 |
| X | DD - A1 - 232 976 (TECHN.HOCH-SCHULE) <br> * Gesamt * <br><br> ---- | 1-3 | |

|  |
|---|
| RECHERCHIERTE SACHGEBIETE (Int. Cl.4) |
| B 23 Q 17/00 |
| B 23 B 15/00 |
| G 01 B 5/00 |
| G 01 B 7/00 |
| G 01 B 21/00 |

Der vorliegende Recherchenbericht wurde für alle Patentansprüche erstellt.

| Recherchenort | Abschlußdatum der Recherche | Prüfer |
|---|---|---|
| WIEN | 23-02-1989 | TOMASELLI |